# EUROPÄISCHE PATENTSCHRIFT

(11) **EP 1 249 362 B1**
(45) Veröffentlichungstag und Bekanntmachung des Hinweises auf die Patenterteilung: **07.06.2006**
(21) Anmeldenummer: 02007614.7
(22) Anmeldetag: 04.04.2002
(51) Int. Cl.: B60N 2/00

(54) **Verfahren zur Herstellung eines Kraftfahrzeugsitzes mit einer Sensormatte zur Erkennung einer Sitzbelegung durch eine Person oder einen Kindersitz,sowie gemäss diesem Verfahren hergestellter Kraftfahrzeugsitz**
Method of Manufacturing a Vehicle Seat with a Sensor Mat to Recognize the Seat Occupant as a Person or a Child Seat as well as Vehicle Seat obtained by Such Method
Procédé de fabrication d'un siège de véhicule avec coussin capteur pour reconnaître l'occupation du siège par une personne ou un siège pour enfant ainsi que siège de véhicule obtenu moyennant ce procédé

(30) Priorität: 12.04.2001 DE 10118629
(43) Veröffentlichungstag der Anmeldung: 16.10.2002
(73) Patentinhaber: ADAM OPEL AG, 65423 Rüsselsheim (DE)
(72) Erfinder: Maier, Jürgen, 67808 Weitersweiler (DE)

(56) Entgegenhaltungen:
- EP-A- 0 143 742
- EP-A- 0 893 300
- DE-A- 19 601 969
- DE-A- 19 646 480
- DE-A- 19 752 976

## Beschreibung

Die Erfindung betrifft ein Verfahren zur Herstellung eines Kraftfahrzeugsitzes mit einer Sensormatte zur Erkennung einer Sitzbelegung durch eine Person oder einen Kindersitz, wobei die Sensormatte im Bereich eines durch einen Sitzbezug verkleideten Schaumpolsters des Sitzkissens angeordnet ist, sowie das Schaumpolster ein unteres Basisschaumteil und ein mit diesem zusammenwirkendes oberes Formschaumteil aufweist und die Sensormatte im Bereich zwischen dem Basisschaumteil und dem Formschaumteil angeordnet und mit dem Basisschaumteil oder dem Formschaumteil verbunden ist. Die Erfindung betrifft ferner einen nach dem Verfahren hergestellten Kraftfahrzeugsitz.

Ein Kraftfahrzeugsitz mit einer Sensormatte zur Erkennung einer Sitzbelegung durch eine Person oder einen Kindersitz, wobei die Sensormatte im Bereich eines durch einen Sitzbezug verkleideten Schaumpolsters des Sitzkissens angeordnet ist, ist aus der DE 196 01 969 A1 bekannt. Dieser Kraftfahrzeugsitz weist ein Sitzkissen mit einem Schaumpolster auf, in das eine Sensormatte der in der DE 196 01 969 A1 beschriebenen Art unverrückbar eingeschäumt ist. Ein solches Schaumpolster kann in einem Arbeitsgang montagefreundlich und passgenau in den Kraftfahrzeugsitz eingebaut werden. Aufwendige Kaschierungsmaßnahmen durch mehrlagige Polsteraufbauten können bei dieser Lösung entfallen, da das Schaumpolster trotz der darin integrierten Sensormatte einen ausreichenden Sitzkomfort bietet.

Nachteilig bei einem solchen Kraftfahrzeugsitz ist jedoch der hohe Aufwand bei der Herstellung des Schaumpolsters, das in einem Schäumwerkzeug mit einer unteren Schäumform und einem oberen Formdeckel hergestellt wird. Die Sensormatte muss dabei in der schalenförmigen Schäumform derart exakt positioniert und befestigt werden, dass das nachfolgend in die Schäumform eingebrachte Schäumungsmittel beim Ausdehnen ("Backen") die Sensormatte von beiden Seiten beaufschlagen kann. Der Einlegeprozess der Sensormatte in die Schäumform sowie die Einschäumung der Sensormatte im Schäumwerkzeug sind daher zeitaufwendig und kompliziert. Es können sich dabei unter der Sensormatte Hohlräume (Lunker) bilden, welche den Herstellungsprozess sowie die Funktion der an der Sensormatte angeordneten Drucksensoren beeinträchtigen können._Die Sensormatte kann sich auch durch das Ausdehnen des Schäumungsmittels während des Herstellungsprozesses wölben, wodurch ebenfalls die Funktion der Drucksensoren beeinträchtigende Spannungen in der Sensormatte auftreten können.

Ein Verfahren zur Herstellung eines Kraftfahrzeugsitzes gemäß der eingangs genannten Art ist aus der DE 196 46 480 A1 bekannt. Dort wird zunächst das Basisschaumteil hergestellt und dann die Sensormatte mit dem Basisschaumteil verbunden. Diese Befestigung erfolgt vorzugsweise durch Kleben oder auch eingeformte mechanische Haltemittel. Anschließend wird das das Basisschaumteil zumindest teilweise abdeckende oder umschließende Formschaumteil erstellt und mit diesem verbunden. Insbesondere wird das Formschaumteil gegen das Basisschaumteil mit der Sensormatte gegengeschäumt.

Aus der eingangs erwähnten DE 196 01 969 Al ist es bekannt, einen Foliendrucksensor zur Sitzbelegungserkennung in ein Sitzkissen-Schaumteil einzuschäumen.

Ein Kraftfahrzeugsitz mit einer Sensormatte zur Erkennung einer Sitzbelegung durch eine Person oder einen Kindersitz ist ferner in der DE 197 52 976 C2 beschrieben.

Der Erfindung liegt die Aufgabe zugrunde, ein Verfahren zur Herstellung eines Kraftfahrzeugsitzes mit einer Sensormatte der eingangs genannten Art zu schaffen, das eine günstige Herstellung des Kraftfahrzeugsitzes gestattet, der überdies einfach aufgebaut und komfortabel sowie sicher in der Funktion sein soll. Aufgabe der Erfindung ist es ferner, eine vorteilhafte Gestaltung eines gemäß diesem Verfahren hergestellten Kraftfahrzeugsitzes anzugeben.

Gelöst wird die Aufgabe durch die Merkmale der Patentansprüche 1 bzw. 5. Vorteilhafte Ausgestaltungen der Erfindung sind in den Unteransprüchen angegeben.

Durch die Erfindung kann das problematische Einschäumen der Sensormatte in das einteilige Schaumpolster gemäß der DE 196 01 969 A1 entfallen. Stattdessen wird das Schaumpolster des Sitzkissens zweiteilig gestaltet und die Sensormatte mit einem dieser Teile, vorzugsweise mit dem oberen Formschaumteil verbunden. Beide Schaumteile, das Formschaumteil und das Basisschaumteil, werden bei der Montage derart zusammengefügt, dass sich die Sensormatte zwischen diesen beiden Schaumteilen befindet. Ein solches Schaumpolster kann in an sich bekannter Weise in einer Sitzschale des Kraftfahrzeugsitzes aufgenommen und von einem Sitzbezug verkleidet werden.

Gemäß der Erfindung ist die Sensormatte an der zum Basisschaumteil zugewandten Seite des Formschaumteils angeordnet und an einer Seite mit dem Formschaumteil flächig verbunden. Eine solche Verbindung zwischen der Sensormatte und dem Formschaumteil kann relativ einfach während des Herstellungsprozesses bei der Ausschäumung des Formschaumteils in einem entsprechenden Schäumwerkzeug mit einer unteren Schäumform und einem diese schließenden Formdeckel erfolgen. Die Sensormatte wird dabei nicht in die Schäumform eingelegt, sondern die Sensormatte wird in einem relativ einfachen Arbeitsschritt am Formdeckel positioniert und lösbar befestigt. Danach kann das Schäumungsmittel in die Schäumform eingebracht werden. Beim Ausdehnen tritt das Schäumungsmittel in Kontakt mit der am Formdeckel angebrachten Sensormatte und geht dadurch mit dieser eine unverrückbare Verbindung ein. Da das Schäumungsmittel bei dieser Herstellungsweise nur von einer Seite die Sensormatte beaufschlagt (anschäumt), können sich keine die Funktion der Sensormatte beeinträchtigenden Hohlräume zwischen dem Formschaumteil und der Sensormatte bilden.

Das Formschaumteil weist zumindest im Bereich der Sitzfläche, die von einer sitzenden Person oder von einem Kindersitz auf Druck beaufschlagt wird (drucksensitiven Bereich), eine - in Hochrichtung gesehen - geringere Dicke als das Basisschaumteil in diesem Bereich auf. Die Dicke des Formschaumteils ist jedoch so zu wählen, dass ein guter Sitzkomfort und eine optimale Handhabung bei der Montage oder dem Transport des Formschaumteils zum Montageort gegeben sind. Durch die geringe Dicke des Formschaumteils ist es möglich, die Sensormatte möglichst nahe dem Sitzbezug zu positionieren, wodurch eine Verbesserung der Funktion der Sensormatte zu erwarten ist.

Die Drucksensoren der Sensormatte sind üblicherweise auf einer flexiblen Folie angeordnet oder in diese eingebettet. Gemäß einer weiteren vorteilhaften Ausführung kann diese Folie zumindest auf einer Seite mit einem ebenfalls flexiblen Trägermaterial, beispielsweise Vlies oder Textil flächig verbunden oder beschichtet werden. Ein solches Trägermaterial kann die Handhabung der Sensormatte bei der Herstellung und der Montage des Formschaumteils sowie die Haltbarkeit und Funktionsweise der Sensormatte verbessern. Das Trägermaterial bietet auch einen Schutz für die Drucksensoren, insbesondere wenn sich diese im fertigen Zustand zwischen dem Trägermaterial und dem Formschaumteil befinden. Auch das Ansprechverhalten dieser Drucksensoren kann durch das Trägermaterial positiv beeinflusst werden.

Weitere Vorteile der Erfindung bestehen darin, dass das Formschaumteil im Vergleich mit dem Basisschaumteil ein hinsichtlich der Zusammensetzung anderes Schaummaterial oder eine unterschiedliche Schaumhärte aufweisen kann. Das Formschaumteil kann beispielsweise aus einem sehr weichen Schaummaterial bestehen, während das Basisschaumteil eine etwas erhöhte Schaumhärte erhält. Damit kann ein weiches Einsitzgefühl erzielt werden, ohne den Dauersitzkomfort zu beeinträchtigen. Weiterhin ist es möglich, Formschaumteile für verschiedene Sitzkissen mit jeweils unterschiedlichem Design auszubilden, während die mit solchen Formschaumteilen zusammenwirkenden Basisschaumteile nicht verändert werden müssen. Dadurch können die Herstellungskosten im Wesentlichen gesenkt und das Aussehen sowie der Sitzkomfort wesentlich verbessert werden. Insbesondere bei der Gestaltung des Formschaumteils aus einem hitzebeständigen Schaummaterial kann am Sitzkissen zwischen dem Formschaumteil und dem Sitzbezug eine übliche Sitzheizmatte verwendet werden. Eine solche Sitzheizmatte kann in an sich bekannter weise lösbar formschlüssig oder durch Kleben mit dem Formschaumteil verbunden sein. Das Formschaumteil kann auch zur Aufnahme der Sitzheizmatte auf der zum Sitzbezug zugewandten Seite mit einem hitzebeständigen Material beschichtet werden, an dem wie zuvor beschrieben die Sitzheizmatte angeordnet werden kann.

Nachstehend wird eine vorteilhafte Ausführungsform der Erfindung anhand der Zeichnungen im einzelnen beschrieben. Es zeigen:
- Fig. 1: eine perspektivische Ansicht eines zum Einbauen in einen Kraftfahrzeugsitz vorbereiteten Sitzkissens mit einer Sensormatte, ohne der umliegenden Sitzteile;
- Fig. 2: einen Längsschnitt durch ein Formschaumteil des Schaumpolsters des Sitzkissens gemäß Fig. 1;
- Fig. 3: eine perspektivische Ansicht eines Schäumwerkzeugs zur Herstellung des Formschaumteils nach Fig. 2.

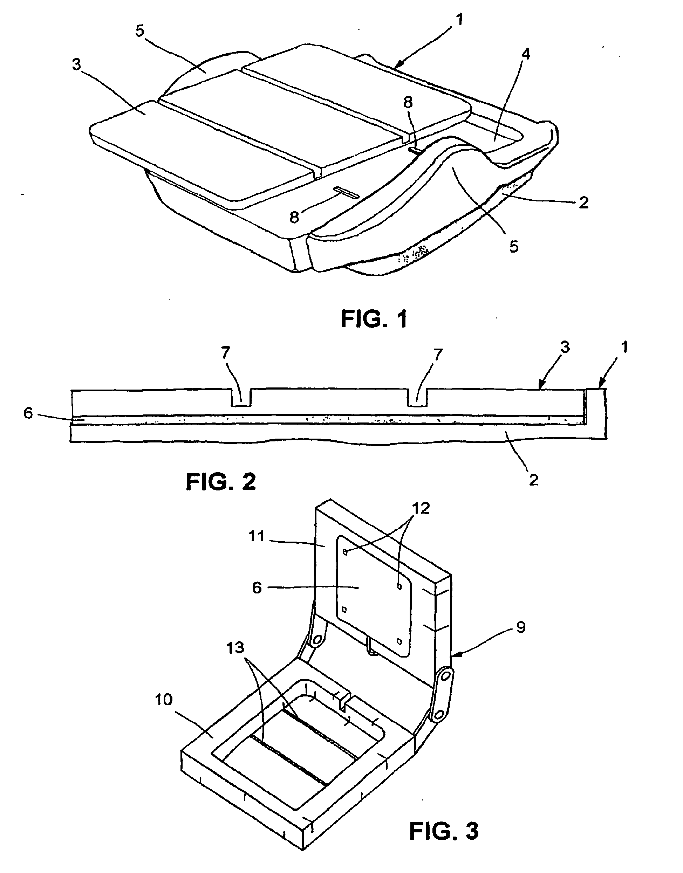

Ein zweiteiliges Sitzkissen 1 eines nicht dargestellten Kraftfahrzeugsitzes weist gemäß Fig. 1 ein unteres Basisschaumteil 2 und ein mit diesem zusammenwirkendes oberes Formschaumteil 3 auf, das im montierten Zustand in einer entsprechend am Basisschaumteil 2 vorgesehenen Ausnehmung 4 formschlüssig aufgenommen ist. Das Formschaumteil 3 hat eine etwa quadratische Form und ist relativ flach mit einer Dicke von etwa 1-2,5 cm ausgebildet. Es erstreckt sich dabei über die gesamte Sitzfläche des Sitzkissens 1. Das Basisschaumteil 2 hat dagegen eine wesentlich größere Dicke und ist im Bereich der Ausnehmung 4 für die Aufnahme des Formschaumteils 3 flach ausgebildet, um eine im Wesentlichen ununterbrochene Anlage des Formschaumteils 3 am Basisschaumteil 2 zu gewährleisten. Am Basisschaumteil 2 sind noch an beiden Seiten des Formschaumteils 3 Wangen 5 ersichtlich, die zur Begrenzung der Sitzfläche in Querrichtung des Kraftfahrzeuges vorgesehen sind.

Das Formschaumteil 3 ist gemäß Fig. 2 an der zum Basisschaumteil 2 zugewandten Seite mit einer Sensormatte 6 flächig verbunden, die mehrere nicht dargestellte Drucksensoren zur Erkennung einer Sitzbelegung enthält. Die Funktionsweise einer solchen Sensormatte 6 sowie deren Steuerung sind an sich bekannt und werden deswegen nicht weiter erläutert. Auf der Oberfläche des Formschaumteils 3 sind weiterhin Abheftkanäle 7 ausgebildet, die zur Befestigung eines nicht dargestellten Sitzbezuges bei der Fertigstellung des Sitzkissens 1 dienen. Im Bereich dieser Abheftkanäle 7 können Klammern eingesetzt werden, die das Formschaumteil 3 und die Sensormatte 6 an bestimmten Stellen durchdringen und am Basisschaumteil 2 an den in Fig. 1 mit der Bezugsziffer 8 versehenen Stellen verankert werden.

Zur Herstellung des vorbezeichneten Formschaumteils 3 ist ein in Fig. 3 schematisch dargestelltes Schäumwerkzeug 9 vorgesehen, das im Wesentlichen eine untere schalenförmige Schäumform 10 und einen diese schließenden Formdeckel 11 aufweist. Der Aufbau eines solchen Schäumwerkzeugs 9 ist an sich bekannt. Neu ist, dass die mit dem Formschaumteil 3 zu verbindende Sensormatte 6 am Formdeckel 11 positioniert und lösbar befestigt wird. Die Befestigung der Sensormatte 6 am Formdeckel 11 kann dabei unterschiedlich gestaltet sein. Im dargestellten Beispiel wird die Sensormatte 6 durch punktuelles Kleben (bei 12) am Formdeckel 11 gehalten. Die Sensormatte 6 kann auch magnetisch oder formschlüssig durch beispielsweise einen Klett-Verschluss am Formdeckel 11 gehalten sein. In Fig. 3 sind weiterhin noch streifenförmige Einlagen 13 zur Bildung der in Fig. 2 dargestellten Abheftkanäle 7 zu sehen, die beabstandet zueinander am Boden der Schäumform 10 angeordnet sind.

Nach dem Anbringen der Sensormatte 6 am Formdeckel 11 wird in den mittleren Bereich der Schäumform 10 ein zur Bildung des Formschaumteils 3 vorgesehenes Schäumungsmittel eingebracht. Die Schäumform 10 kann nun durch den Formdeckel 11 geschlossen und zusammen mit dem Schäumungsmittel erhitzt werden. Dabei dehnt sich das Schäumungsmittel aus und tritt in Kontakt mit der am Formdeckel 11 angebrachten Sensormatte 6. Es entsteht somit eine flächige Verbindung zwischen der Sensormatte 6 und dem Formschaumteil 3, das nach einer Verweilzeit von ca. 10-15 min aus dem Schäumwerkzeug 9 entnommen und nach dem Abkühlen zur Montage des Sitzkissens 1 verwendet werden kann.

### Bezugszeichenliste

- Sitzkissen: 1
- Basisschaumteil: 2
- Formschaumteil: 3
- Ausnehmung: 4
- Wangen: 5
- Sensormatte: 6
- Abheftkanal: 7
- Verankerungsstelle: 8
- Schäumwerkzeug: 9
- Schäumform: 10
- Formdeckel: 11
- Klebestellen: 12
- Einlage: 13

## Patentansprüche

1. Verfahren zur Herstellung eines Kraftfahrzeugsitzes mit einer Sensormatte (6) zur Erkennung einer Sitzbelegung durch eine Person oder einen Kindersitz, wobei die Sensormatte (6) im Bereich eines durch einen Sitzbezug verkleideten Schaumpolsters des Sitzkissens (1) angeordnet ist, sowie das Schaumpolster ein unteres Basisschaumteil (2) und ein mit diesem zusammenwirkendes oberes Formschaumteil (3) aufweist und die Sensormatte (6) im Bereich zwischen dem Basisschaumteil (2) und dem Formschaumteil (3) angeordnet und mit dem Basisschaumteil (2) oder dem Formschaumteil (3) verbunden ist, **dadurch gekennzeichnet, dass** die Verbindung der Sensormatte (6) mit dem Basisschaumteil (2) oder dem Formschaumteil (3) während des Herstellungsprozesses durch Ausschäumung des Basisschaumteils (2) oder des Formschaumteils (3) in dem jeweiligen Schäumwerkzeug (9) erfolgt, wobei das Schäumwerkzeug (9) eine untere Schäumform (10) für das Basisschaumteil (2) oder das Formschaumteil (3) und einen diese schließenden Formdeckel (11) aufweist und die Sensormatte (6) vor dem Einbringen des Schäumungsmittels in die Schäumform (10) am Formdeckel (11) positioniert und lösbar befestigt wird.

2. Verfahren nach Anspruch 1, **dadurch gekennzeichnet, dass** die Sensormatte (6) durch punktuelles Kleben am Formdeckel (11) gehalten ist.

3. Verfahren nach Anspruch 1, **dadurch gekennzeichnet, dass** die Sensormatte (6) magnetisch am Formdeckel (11) gehalten ist.

4. Verfahren nach Anspruch 1, **dadurch gekennzeichnet, dass** die Sensormatte (6) formschlüssig, insbesondere mittels eines Klett-Verschlusses, am Formdeckel (11) gehalten ist.

5. Kraftfahrzeugsitz, der gemäß dem Verfahren nach einem der Ansprüche 1 bis 4 hergestellt ist, **dadurch gekennzeichnet, dass** die Sensormatte (6) an der zum Basisschaumteil (2) zugewandten Seite des Formschaumteils (3) mit diesem flächig verbunden ist, oder die Sensormatte (6) an der zum Formschaumteil (3) zugewandten Seite des Basisschaumteils (2) mit diesem flächig verbunden ist.

6. Kraftfahrzeugsitz nach einem der Ansprüche 1 bis 5, **dadurch gekennzeichnet, dass** die Sensormatte (6) mehrere Drucksensoren aufweist und in einem durch die Person oder den Kindersitz belastbaren drucksensitiven Bereich des Formschaumteils (3) oder des Basisschaumteils (2) angeordnet ist.

7. Kraftfahrzeugsitz nach Anspruch 6, **dadurch gekennzeichnet, dass** die Drucksensoren auf einer flexiblen Folie angeordnet oder in diese eingebettet sind, wobei die Folie mit einem ebenfalls flexiblen Trägermaterial, beispielsweise Vlies oder Textil flächig verbunden ist.

8. Kraftfahrzeugsitz nach einem der Ansprüche 5 bis 7, **dadurch gekennzeichnet, dass** das Formschaumteil (3) im drucksensitiven Bereich oder im Bereich der Verbindung mit der Sensormatte (6) eine - in vertikaler Richtung gemessen - wesentlich geringere Dicke als das Basisschaumteil (2) aufweist.

9. Kraftfahrzeugsitz nach einem der Ansprüche 5 bis 8, **dadurch gekennzeichnet, dass** am Basisschaumteil (2) zumindest eine Ausnehmung (4) zur formschlüssigen und lösbaren Aufnahme des Formschaumteils (3) vorgesehen ist.

10. Kraftfahrzeugsitz nach einem der Ansprüche 5 bis 9, **dadurch gekennzeichnet, dass** das Formschaumteil (3) im Vergleich mit dem Basisschaumteil (2) ein hinsichtlich der Zusammensetzung anderes Schaummaterial oder eine unterschiedliche Schaumhärte aufweist.

11. Kraftfahrzeugsitz nach einem der Ansprüche 5 bis 10, **dadurch gekennzeichnet, dass** das Formschaumteil (3) zur Aufnahme einer Heizmatte aus einem hitzebeständigen Material besteht oder auf der zum Sitzbezug zugewandten Seite mit einem hitzebeständigen Material beschichtet oder verbunden ist.

12. Kraftfahrzeugsitz nach einem der Ansprüche 5 bis 11, **dadurch gekennzeichnet, dass** die Heizmatte am Formschaumteil (3) an der zum Sitzbezug zugewandten Seite fixiert und/oder mit dem Formschaumteil (3) flächig verbunden ist.

## Claims

1. A method for manufacturing a motor vehicle seat incorporating a sensor mat (6) for detecting whether a seat is occupied by a person or a child seat, wherein the sensor mat (6) is arranged in the region of a foam pad of the seat cushion (1) which is covered by a seat cover, and the foam pad comprises a lower base foamed part (2) and an upper shaped foamed part (3) which cooperates therewith and the sensor mat (6) is arranged in the region between the base foamed part (2) and the shaped foamed part (3) and is connected to the base foamed part (2) or the shaped foamed part (3), **characterized in that** the connection of the sensor mat (6) to the base foamed part (2) or the shaped foamed part (3) is effected during the production process by foaming the base foamed part (2) or the shaped foamed part (3) in the respective foaming tool (9), wherein the foaming tool (9) comprises a lower foaming mould (10) for the base foamed part (2) or the shaped foamed part (3) and a mould cover (11) for closing it, and the sensor mat (6) is positioned on the mould cover (11) and fixed thereto in releasable manner prior to the introduction of the foaming agent into the foaming mould (10).

2. A method in accordance with Claim 1, **characterized in that** the sensor mat (6) is held on the mould cover (11) by dots of adhesive.

3. A method in accordance with Claim 1, **characterized in that** the sensor mat (6) is held on the mould cover (11) magnetically.

4. A method in accordance with Claim 1, **characterized in that** the sensor mat (6) is held on the mould cover (11) in interlocking manner, in particular, by means of a hook and loop fastener.

5. A motor vehicle seat which is manufactured in accordance with the method in accordance with any of the Claims 1 to 4, **characterized in that** the sensor mat (6) is connected on the side of the shaped foamed part (3) facing the base foamed part (2) and is connected thereto in flush manner, or the sensor mat (6) is connected on the side of the base foamed part (2) facing the shaped foamed part (3) and is connected thereto in flush manner.

6. A motor vehicle seat in accordance with any of the Claims 1 to 5, **characterized in that** the sensor mat (6) comprises a plurality of pressure sensors and is arranged in a pressure sensitive region of the shaped foamed part (3) or the base foamed part (2) which is adapted to bear the person or the child seat.

7. A motor vehicle seat in accordance with Claim 6, **characterized in that** the pressure sensors are arranged on a flexible foil or are embedded therein, wherein the foil is connected in flush manner to a likewise flexible substrate, a fleece or a textile for example.

8. A motor vehicle seat in accordance with any of the Claims 5 to 7, **characterized in that** the shaped foamed part (3) has a substantially lesser thickness - as measured in the vertical direction - than the base foamed part (2) in the pressure sensitive region or in the vicinity of the connection to the sensor mat (6).

9. A motor vehicle seat in accordance with any of the Claims 5 to 8, **characterized in that** at least one recess (4) is provided in the base foamed part (2) for accommodating the shaped foamed part (3) in interlocking and releasable manner.

10. A motor vehicle seat in accordance with any of the Claims 5 to 9, **characterized in that** in regard to the composition thereof, the shaped foamed part (3) is of a different foamed material or has a different foam hardness in comparison with the base foamed part (2).

11. A motor vehicle seat in accordance with any of the Claims 5 to 10, **characterized in that** the shaped foamed part (3) consists of a heatproof material for the purposes of accommodating a heating mat or is coated with or connected to a heatproof material on the side facing the seat cover.

12. A motor vehicle seat in accordance with any of the Claims 5 to 11, **characterized in that** the heating mat is fixed to the shaped foamed part (3) on the side facing the seat cover and/or is connected to the shaped foamed part (3) in flush manner.

## Revendications

1. Procédé de fabrication d'un siège de véhicule comportant une nappe de capteurs (6) destinée à détecter l'occupation du siège par une personne ou un siège pour enfant, la nappe de capteurs (6) étant agencée dans la zone d'un rembourrage en mousse de l'assise du siège (1), revêtu d'un habillage de siège, le rembourrage en mousse comportant une partie de base en mousse (2) inférieure et une partie profilée en mousse (3) supérieure, coopérant avec cette dernière, et la nappe de capteurs (6) est agencée dans la zone entre la partie de base (2) et la partie profilée (3) et est assemblée à la partie de base (2) ou à la partie profilée (3), **caractérisé en ce que** l'assemblage de la nappe de capteurs (6) avec la partie de base en mousse (2) ou la partie profilée en mousse (3) est réalisé pendant le processus de fabrication sous l'effet du moussage de la partie de base (2) ou de la partie profilée (3) dans le moule de moussage (9) correspondant, le moule de moussage (9) comportant une partie de moulage (10) inférieure pour la partie de base en mousse (2) ou la partie profilée en mousse (3), et un couvercle de moule (11) fermant ladite partie de moulage, et la nappe de capteurs (6) est positionnée et fixée de manière amovible contre le couvercle de moule (11) avant l'introduction du produit de moussage dans la partie de moulage (10).

2. Procédé selon la revendication 1, **caractérisé en ce que** la nappe de capteurs (6) est maintenue par des points de colle sur le couvercle de moule (11).

3. Procédé selon la revendication 1, **caractérisé en ce que** la nappe de capteurs (6) est maintenue par voie magnétique sur le couvercle de moule (11).

4. Procédé selon la revendication 1, **caractérisé en ce que** la nappe de capteurs (6) est maintenue par conjugaison de forme, en particulier par un assemblage auto-agrippant, sur le couvercle de moule (11).

5. Siège de véhicule, réalisé selon le procédé selon l'une quelconque des revendications 1 à 4, **caractérisé en ce que** la nappe de capteurs (6) est assemblée sur toute sa surface à la partie profilée en mousse (3), sur le côté de celle-ci orienté vers la partie de base en mousse (2), ou la nappe de capteurs (6) est assemblée sur toute sa surface à la partie de base en mousse (2), sur le côté de celle-ci orienté vers la partie profilée en mousse (3).

6. Siège de véhicule selon l'une quelconque des revendications 1 à 5, **caractérisé en ce que** la nappe de capteurs (6) comporte plusieurs capteurs de pression et est agencée dans une zone de la partie profilée en mousse (3) ou de la partie de base en mousse (2), laquelle zone est sensible à la pression exercée par la personne ou le siège pour enfant.

7. Siège de véhicule selon la revendication 6, **caractérisé en ce que** les capteurs de pression sont agencés sur une feuille flexible ou sont noyés dans celle-ci, ladite feuille étant assemblée sur toute la surface à un matériau support également flexible, tel qu'un non tissé ou un textile.

8. Siège de véhicule selon l'une quelconque des revendications 5 à 7, **caractérisé en ce que** la partie profilée en mousse (3), dans la zone sensible à la pression ou dans la zone d'assemblage à la nappe de capteurs (6), a une épaisseur - considérée dans le sens vertical - nettement inférieure à celle de la partie de base en mousse (2).

9. Siège de véhicule selon l'une quelconque des revendications 5 à 8, **caractérisé en ce qu'**au moins un évidement (4) est prévu sur la partie de base en mousse (2) pour recevoir par conjugaison de forme et de manière amovible la partie profilée en mousse (3).

10. Siège de véhicule selon l'une quelconque des revendications 5 à 9, **caractérisé en ce que** la partie profilée en mousse (3) est réalisée dans un matériau cellulaire avec une composition ou une dureté différentes de celles de la partie de base en mousse (2).

11. Siège de véhicule selon l'une quelconque des revendications 5 à 10, **caractérisé en ce que** la partie profilée en mousse (3), en vue de recevoir un coussin chauffant, est réalisée dans un matériau cellulaire résistant à la chaleur ou est revêtue ou assemblée, sur son côté orienté vers l'habillage du siège, avec un matériau résistant à la chaleur.

12. Siège de véhicule selon l'une quelconque des revendications 5 à 11, **caractérisé en ce que** le coussin chauffant est fixé sur la partie profilée en mousse (3) sur le côté orienté vers l'habillage du siège et/ou est assemblé sur toute sa surface à la partie profilée en mousse (3).
